# EUROPEAN PATENT APPLICATION

(11) **EP 4 535 163 A1**
(43) Date of publication of application: **09.04.2025**
(21) Application number: 22944965.7
(22) Date of filing: 19.12.2022
(51) Int. Cl.: G06F 8/30

(54) **INFORMATION PROCESSING METHOD, INFORMATION PROCESSING DEVICE, AND PROGRAM**

(30) Priority: 31.05.2022 JP 2022089222
(71) Applicant: Exawizards Inc., Tokyo 108-0023 (JP)
(72) Inventor: SAKANE, Yutaka, Tokyo 108-0023 (JP); HARUTA, Makoto, Tokyo 108-0023 (JP); ISHIYAMA, Ko, Tokyo 108-0023 (JP); MAEDA, Toshiyuki, Tokyo 108-0023 (JP); OJI, Saori, Tokyo 108-0023 (JP); YOSHIDA, Shohei, Tokyo 108-0023 (JP); OMATA, Goki, Tokyo 108-0023 (JP); KUTI, Patrick, Tokyo 108-0023 (JP)
(74) Representative: Cabinet Beaumont
(86) International application number: PCT/JP2022/046563
(87) International publication number: WO 2023/233691

(57) **Abstract**

To easily perform system development with a high degree of freedom.

An information processing method according to one embodiment is an information processing method executed by an information processing device, including: processing of displaying a design screen of a system; processing of disposing a component image corresponding to a type of system component prepared in advance and a flow image indicating a data flow between the system components on the design screen, in accordance with a user manipulation; and processing of creating a design file of the system, on the basis of the component image and the flow image disposed on the design screen.

## Description

### Technical Field

The present invention relates to an information processing method, an information processing device, and a program.

### Background Art

Recently, a service enabling no-code or low-code system development has been provided. For example, as a method for developing an application using a spreadsheet, in Cited Document 1, a method implemented by a computer for creating an interactive web application including at least one web page, including: determining one or a plurality of data sources in a spreadsheet, each having zero or more data records, the data source including a first part of the spreadsheet; determining one or a plurality of user interface templates from within the spreadsheet, each including a data format relevant to one or a plurality of the data sources, the user interface template including a second part of the spreadsheet; creating a web data store including a data record from a data source identified in the spreadsheet; creating a specific web page of an interactive web application, on the basis of one or a plurality of user interface templates corresponding to a specific web page, the specific web page referring to one or a plurality of data sources identified on the basis of one or a plurality of user interface templates corresponding to the specific web page; creating presentation of a specific web page including one or a plurality of data records identified and formatted by one or a plurality of user interface templates corresponding to the specific web page, in response to a request relevant to presentation of the specific web page of the interactive web application; and updating the web data store in response to receiving user input through an input page of an interactive web application created on the basis of the spreadsheet, is disclosed.

### Citation List

### Patent Literature:

Patent Literature 1: Japanese Published Patent Publication No. 2020-504889 Summary

### Technical Problems

In the related art, only the system components prepared in advance can be combined, and thus, the degree of freedom in the development is low. In a case where the system component itself can be freely developed in order to increase the degree of freedom in the development, it is difficult to perform the no-code or low-code development.

The present invention has been made in consideration of the problems described above, and an object thereof is to easily perform system development with a high degree of freedom.

### Solution to Problems

An information processing method according to one embodiment is an information processing method executed by an information processing device, including: processing of displaying a design screen of a system; processing of disposing a component image corresponding to a type of system component prepared in advance and a flow image indicating a data flow between the system components on the design screen, in accordance with a user manipulation; and processing of creating a design file of the system, on the basis of the component image and the flow image disposed on the design screen.

### Advantageous Effects of Invention

According to one embodiment, it is possible to easily perform the system development with a high degree of freedom.

### Brief Description of Drawings

FIG. 1 is a diagram illustrating an example of a hardware configuration of a development support device.

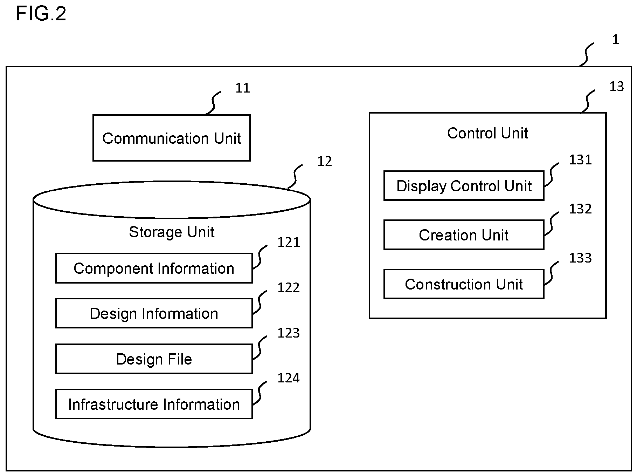

FIG. 2 is a diagram illustrating an example of a functional configuration of the development support device.
FIG. 3 is a flowchart illustrating an example of processing executed by the development support device.
FIG. 4 is a diagram illustrating an example of a design screen.

### Description of Embodiments

Hereinafter, each embodiment of the present invention will be described with reference to the attached drawings. Note that in the description of the specification and the drawings according to each embodiment, the same reference numerals will be applied to constituents having substantially the same functional configuration, and the repeated description will be omitted.

### <Outline of Development Support Device 1>

First, the outline of a development support device 1 according to this embodiment will be described. The development support device 1 according to this embodiment is an information processing device for a user to perform system development. Here, the system includes a combination of one or a plurality of information processing devices, sensors, equipment instruments, and the like, and is an information processing system or a control system. The user designs a desired system by disposing a component image c and a flow image f on the screen of the development support device 1. In addition, the user adds the contents (advanced setting and a source code) of a system component to the disposed component image c.

The development support device 1 automatically creates a design file of the system designed by the user, and automatically constructs an infrastructure capable of executing the system, in accordance with the design file. The development support device 1, for example, is a personal computer (PC), a smart phone, or a tablet terminal, but is not limited thereto. The function of the development support device 1 may be attained by a combination of a plurality of information processing devices including a server.

### <Hardware Configuration of Development Support Device 1>

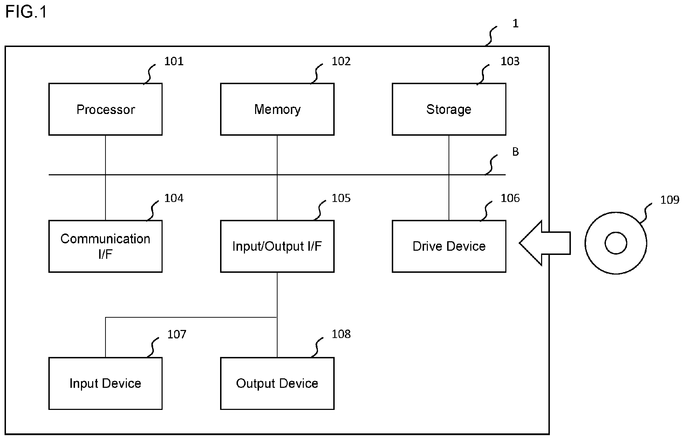

Next, the hardware configuration of the development support device 1 will be described. FIG. 1 is a diagram illustrating an example of the hardware configuration of the development support device 1. As illustrated in FIG. 1, the development support device 1 includes a processor 101, a memory 102, a storage 103, a communication I/F 104, an input/output I/F 105, and a drive device 106, which are connected to each other through a bus B.

The processor 101 controls each configuration of the development support device 1 and attains the function of the development support device 1 by decompressing various programs including an operating system (OS) stored in the storage 103 in the memory 102 and executing the programs. The processor 101, for example, is a central processing unit (CPU), a micro processing unit (MPU), a graphics processing unit (GPU), an application specific integrated circuit (ASIC), a digital signal processor (DSP), or a combination thereof.

The memory 102, for example, is a read only memory (ROM), a random access memory (RAM), or a combination thereof. ROM, for example, is a programmable ROM (PROM), an erasable programmable ROM (EPROM), an electrically erasable programmable ROM (EEPROM), or a combination thereof. The RAM, for example, is a dynamic RAM (DRAM), a static RAM (SRAM), or a combination thereof.

The storage 103 stores various programs including the OS and data. The storage 103, for example, is a flash memory, a hard disk drive (HDD), a solid state drive (SSD), storage class memories (SCM), or a combination thereof.

The communication I/F 104 is an interface for connecting the development support device 1 to an external device through a network N to control communication. The communication I/F 104, for example, is Bluetooth (Registered Trademark), Wi-Fi (Registered Trademark), ZigBee (Registered Trademark), Ethernet (Registered Trademark), or an adapter based on optical communication, but is not limited thereto.

The input/output I/F 105 is an interface for connecting an input device 107 and an output device 108 to the development support device 1. The input device 107, for example, is a mouse, a keyboard, a touch panel, a microphone, a scanner, a camera, various sensors, a manipulation button, or a combination thereof. The output device 108, for example, is a display, a projector, a printer, a speaker, a vibrator, or a combination thereof.

The drive device 106 reads and writes data for the disk medium 109. The drive device 106, for example, is a magnetic disk drive, an optical disk drive, a magnetooptical disk drive, or a combination thereof. The disk medium 109, for example, is a compact disc (CD), a digital versatile disc (DVD), a floppy disk (FD), magneto-optical disk (MO), a Blu-ray (Registered Trademark) disc (BD), or a combination thereof.

Note that in this embodiment, the program may be written in the memory 102 or the storage 103 in the production step of the development support device 1, may be provided to the development support device 1 through the network N, or may be provided to the development support device 1 through a non-transitory computer-readable recording medium such as the disk medium 109.

### <Function Configuration of Development Support Device 1>

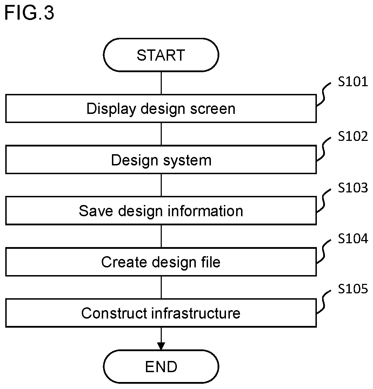

Next, the functional configuration of the development support device 1 will be described. FIG. 3 is a diagram illustrating an example of the functional configuration of the development support device 1. As illustrated in FIG. 3, the development support device 1 includes a communication unit 11, a storage unit 12, and a control unit 13.

The communication unit 11 is attained by the communication I/F 104. The communication unit 11 transmits and receives information with respect to other information processing devices through a network. The network, for example, is a wired local area network (LAN), a wireless LAN, the internet, a public network, a mobile data communication network, or a combination thereof.

The storage unit 12 is attained by the memory 102 and the storage 103. The storage unit 12 stores component information 121, design information 122, a design file 123, and infrastructure information 124.

The component information 121 is information relevant to a system component prepared in advance. The system component is the constituent of the system. The system component prepared in advance includes a user interface (UI), an endpoint, an entity, a trigger, a data source, a storage, a pipeline, a function, and an artificial intelligence (AI) model. Note that the system component prepared in advance may not include some of the above, or may include other than the above.

The UI is a screen on which the output of the system is displayed. The endpoint is the address of an application programming interface (API). The entity is a variable in which a value that is changed over time is stored. The trigger is an event to be a starting point for processing. The data source is the whereabout of data. The storage is a store device in which data is stored. The pipeline is a collection of a series of pieces of processing. The function is some kind of arithmetic processing. The AI model is processing using an AI model.

The component information 121 includes a component image c, component setting, a registered component, and a flow image f.

The component image c is an image corresponding to the type of system component prepared in advance. As the component image c, each component image c corresponding to the UI, the endpoint, the entity, the trigger, the data source, the storage, the pipeline, the function, and the AI model is prepared.

The component setting is information indicating a setting item according to the type of system component prepared in advance. The component setting, for example, includes the name and the contents of the component, but is not limited thereto. Examples of the setting item of the UI include the name of the UI, the contents of the UI, the entity displayed on the screen, the display format of the entity, and the like. In addition, examples of the setting item of the AI model include the name of the AI model, the contents of the AI model, the input/output of the AI model, and the like.

The registered component is a system component prepared in advance. The registered component can be prepared for each type of system component prepared in advance. The user is capable of selecting the registered component, as the contents of the component.

The flow image f is an image indicating a data flow between the system components. The flow image f, for example, is an arrow connecting the component images c, but is not limited thereto.

The design information 122 is information relevant to the system designed by the user on a design screen D of the system. The design screen D is a screen for the user to design the system. The design information 122 includes the disposition of the component image c disposed by the user, the component setting of the disposed component image c, and the disposition of the flow image f disposed by the user.

The design file 123 is a file that is created from the design information 122 and represents the design of the system. The design file 123 includes information indicating the component setting of the system component corresponding to the component image c disposed by the user and the data flow corresponding to the flow image f disposed by the user. The design file 123, for example, is an XML file, a YAML file, or a JSON file, but is not limited thereto.

The infrastructure information 124 is information that is designed on the basis of the design file 123 and indicates the infrastructure of the system. The infrastructure information 124 includes information indicating an API gateway, a data base (DB), a virtual machine, a storage, and network setting.

The control unit 13 is attained in cooperation with other hardware configurations by the processor 101 reading out a program from the memory 102 and executing the program. The control unit 13 controls the entire operation of the development support device 1. The control unit 13 includes a display control unit 131, a creation unit 132, and a construction unit 133.

The display control unit 131 controls the displaying of the display, in accordance with a user manipulation. The display control unit 131, for example, displays the design screen D on the display, and disposes the component image c and the flow image f on the design screen D, in accordance with the user manipulation. The display control unit 131 saves, as the design information 122, the disposition of the component image c disposed by the user, the component setting of the disposed component image c, and the disposition of the flow image f disposed by the user in the storage unit 12.

The creation unit 132 creates the design file 123, on the basis of the design information 122 saved in the storage unit 12. Accordingly, the design file of the system corresponding to the component image c disposed on the design screen D and the component setting thereof, and the flow image f disposed on the design screen D is created. The creation unit 132 saves the created design file 123 in the storage unit 12.

The construction unit 133 constructs the infrastructure of the system such that the system represented by the design file 123 can be operated, on the basis of the design file 123 saved in the storage unit 12. The construction of the infrastructure includes the start-up of the API gateway, the start-up of the DB, the start-up of the virtual machine, the preparation of the storage, and the setting of the network. Note that the construction of the infrastructure may not include some of the above, or may include other than the above. The construction unit 133 saves, as the infrastructure information 124, the information indicating the constructed infrastructure in the storage unit 12.

### <Learning Processing Executed by Development Support Device 1>

Next, processing executed by the development support device 1 according to this embodiment will be described. FIG. 3 is a flowchart illustrating an example of the processing executed by the development support device 1.

### (Step S101)

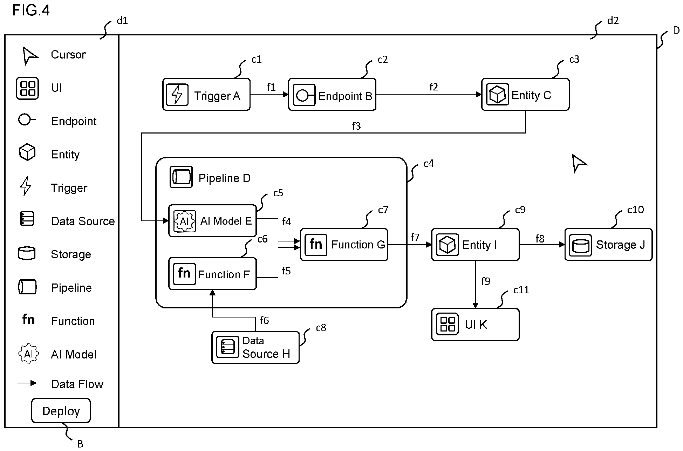

First, the display control unit 131 displays the design screen D on the display of the development support device 1, with reference to the component information 121 (step S101). Here, FIG. 4 is a diagram illustrating an example of the design screen D. The design screen D in FIG. 4 has a selection region d1 and a design region d2.

The selection region d1 is a region for selecting a manipulation target of the user, and is disposed on the left side of the design screen D. In the selection region d1, a cursor, a list of the system components (the UI, the endpoint, the entity, the trigger, the data source, the storage, the pipeline, the function, and the AI model) that can be disposed on the design screen D, and the data flow capable of connecting the component images c are displayed to be selectable. In addition, in the selection region d1, a deployment button B is disposed. The deployment button B is a button for deploying the system designed by the user.

The design region d2 is a region for the user to design the system, and is disposed on the right side of the selection region d1. In the design region d2, the component image c and the flow image f can be freely disposed. In addition, the component setting including the name and the contents of the component can be added to the component image c disposed in the design region d2.

### (Step S102)

Next, the user designs a desired system on the design screen D (step S102). Specifically, the user selects the system component in the selection region d1, and selects the desired position in the design region d2. In a case where such a user manipulation is received, the display control unit 131 disposes the component image c corresponding to the system component selected by the user in the selection region d1 at the position selected by the user in the design region d2. By the user repeating such a manipulation, a plurality of component images c are disposed in the design region d2.

In addition, the user selects the data flow in the selection region d1, and selects two component images c disposed in the design region d2. In a case where such a user manipulation is received, the display control unit 131 disposes the flow image f (an arrow) from the first component image c selected by the user toward the second component image c in the design region d2.

Further, the user selects the component image c disposed in the design region d2. In a case where such a user manipulation is received, the display control unit 131 displays a setting screen for the selected component image c. The user is capable of adding the component setting including the name and the contents of the system component from the setting screen. The user, as the contents of the system component, may select the registered component, or may directly input the source code. In addition, the contents of the system component may be in blank.

In the example of FIG. 4, in the design region d2, component images c1 to c11 and flow images f1 to f9 are disposed.

The component image c1 is a component image c corresponding to the trigger, and is named as "trigger A". The component image c2 is a component image c corresponding to the endpoint, and is named as "endpoint B". The component image c3 is a component image c corresponding to the entity, and is named as "entity C". The component image c4 is a component image c corresponding to the pipeline, and is named as "pipeline D". The component image c5 is a component image c corresponding to the AI model, and is named as "AI model E". The component images c6 and c7 are a component image c corresponding to the function, and are named as "function F" and "function G", respectively. The component image c8 is a component image c corresponding to the data source, and is named as "data source H". The component image c9 is a component image c corresponding to the entity, and is named as "entity I". The component image c10 is a component image c corresponding to the storage, and is named as "storage J". The component image c11 is a component image c corresponding to the UI, and is named as "UIK".

The flow image f1 is a flow image f from the component image c1 toward the component image c2. The flow image f2 is a flow image f from the component image c2 toward the component image c3. The flow image f3 is a flow image f from the component image c3 toward the component image c5. The flow image f4 is a flow image f from the component image c5 toward the component image c7. The flow image f5 is a flow image f from the component image c6 toward the component image c7. The flow image f6 is a flow image f from the component image c8 toward the component image c6. The flow image f7 is a flow image f from the component image c7 toward the component image c9. The flow image f8 is a flow image f from the component image c9 toward the component image c10. The flow image f9 is a flow image f from the component image c9 toward the component image c11.

In the system of FIG. 4, in a case where the trigger A is turned on, the effect is input to the endpoint B, and a return value is input to the entity C. The entity C is input to the AI model E, and the output of the AI model E is input to the function G. On the other hand, data of the data source H is input to the function F, and the output of the function F is input to the function G. The output of the function G to which the output of the AI model E and the output of the function F are input is input to the entity I. Processing using the AI model E and processing using the functions F and G are executed by a series of pipelines D. After that, the entity I is saved in the storage J and displayed in UIK.

The user is capable of designing the system as described above by only disposing the component image c and the flow image f on the design screen D. Note that the user manipulation for disposing the component image c and the flow image f is not limited to the example described above.

### (Step S103)

In a case where the design of the system is completed, the user selects the deployment button B. In a case where the deployment button B is selected, the display control unit 131 saves the design information 122 including the disposition of the component image c disposed by the user on the design screen D, the component setting of the disposed component image c, and the disposition of the flow image f disposed by the user in the storage unit 12 (step S103).

### (Step S104)

Next, the creation unit 132 creates the design file 123, on the basis of the design information 122 saved in the storage unit 12 (step S104). That is, the creation unit 132 creates the design file 123, on the basis of the disposition of the component image c disposed by the user on the design screen D, the component setting of the disposed component image c, and the disposition of the flow image f disposed by the user. The creation unit 132 saves the created design file 123 in the storage unit 12.

### (Step S105)

After that, the construction unit 133 constructs the infrastructure of the system, on the basis of the design file 123 saved in the storage unit 12 (step S105). The construction unit 133 saves the infrastructure information 124 relevant to the constructed infrastructure in the storage unit 12.

### <Conclusion>

As described above, according to this embodiment, the user is capable of designing a desired system by only disposing the component image c and the flow image f. In addition, the contents of the system component can be freely added after the component image c is disposed. As a result, by the development support device 1, the user is capable of easily performing the system development with a degree of freedom.

In addition, according to this embodiment, for the system designed by the user on the design screen D, the design file 123 is automatically created, and the infrastructure capable of executing the system is automatically constructed. Accordingly, the user is capable of immediately operating the designed system.

In addition, according to this embodiment, it is possible to separate the overall design of the system by the disposition of the component image c and the flow image f and the detailed design by the addition of the contents (such as the source code) of the system component from each other. Accordingly, a person skilled in the art of the overall design is capable of simply performing the overall design of the system regardless of the detailed design. In addition, a person skilled in the art of the detailed design is capable of performing the detailed design of a function or the like of which the person skilled in the art is in charge.

### <Supplementary Notes>

This embodiment includes the following disclosure.

### (Supplementary Note 1)

An information processing method executed by an information processing device, including:
processing of displaying a design screen of a system;
processing of disposing a component image corresponding to a type of system component prepared in advance and a flow image indicating a data flow between the system components on the design screen, in accordance with a user manipulation; and
processing of creating a design file of the system, on the basis of the component image and the flow image disposed on the design screen.

### (Supplementary Note 2)

The information processing method according to supplementary note 1,
in which the type of system component includes at least one of a UI, an endpoint, an entity, a trigger, a data source, a storage, a pipeline, a function, and an AI model.

### (Supplementary Note 3)

The information processing method according to supplementary note 1,
in which contents of the system component are added after the component image is disposed.

### (Supplementary Note 4)

The information processing method according to supplementary note 1,
in which the flow image is an arrow connecting the component images.

### (Supplementary Note 5)

The information processing method according to supplementary note 1,
in which the design file is an XML file, a YAML file, or a JSON file.

### (Supplementary Note 6)

The information processing method according to supplementary note 1,
in which an infrastructure of the system is constructed on the basis of the design file.

### (Supplementary Note 7)

The information processing method according to supplementary note 6,
in which the construction of the infrastructure includes at least one of start-up of an API gateway, start-up of a DB, start-up of a virtual machine, preparation of a storage, and setting of a network.

### (Supplementary Note 8)

An information processing method, including:
a display control unit executing
processing of displaying a design screen of a system, and
processing of disposing a component image corresponding to a type of system component prepared in advance and a flow image indicating a data flow between the system components on the design screen, in accordance with a user manipulation; and
a creation unit creating a design file of the system, on the basis of the component image and the flow image disposed on the design screen.

### (Supplementary Note 9)

A program for causing a computer to execute an information processing method, including:
processing of displaying a design screen of a system;
processing of disposing a component image corresponding to a type of system component prepared in advance and a flow image indicating a data flow between the system components on the design screen, in accordance with a user manipulation; and
processing of creating a design file of the system, on the basis of the component image and the flow image disposed on the design screen.

The embodiments disclosed as described above are illustrative in all respects and are not restrictive. The scope of the present invention is defined by the claims, but not by the above meaning, and is intended to include the meaning equivalent to the claims and all modifications within the scope. In addition, the present invention is not limited to each embodiment described above, and various modifications are available within the scope of the claims, and an embodiment obtained by suitably combining technical means disclosed in different embodiments, respectively, is also included in the technical scope of the present invention.

### Reference Signs List

- 1: development support device
- 11: communication unit
- 12: storage unit
- 13: control unit
- 101: processor
- 102: memory
- 103: storage
- 104: communication I/F
- 105: input/output I/F
- 106: drive device
- 107: input device
- 108: output device
- 109: disk medium
- 121: component information
- 122: design information
- 123: design file
- 124: infrastructure information
- 131: display control unit
- 132: creation unit
- 133: construction unit

## Claims

1. An information processing method executed by an information processing device, comprising:
processing of displaying a design screen of a system;
processing of disposing a component image corresponding to a type of system component prepared in advance and a flow image indicating a data flow between the system components on the design screen, in accordance with a user manipulation;
processing of creating a design file of the system, on the basis of the component image and the flow image disposed on the design screen; and
processing of constructing an infrastructure of the system, on the basis of the design file.

2. The information processing method according to claim 1,
wherein the type of system component includes at least one of a UI, an endpoint, an entity, a trigger, a data source, a storage, a pipeline, a function, and an AI model.

3. The information processing method according to claim 1,
wherein contents of the system component are added after the component image is disposed.

4. The information processing method according to claim 1,
wherein the flow image is an arrow connecting the component images.

5. The information processing method according to claim 1,
wherein the design file is an XML file, a YAML file, or a JSON file.

6. The information processing method according to claim 1,
wherein the construction of the infrastructure includes at least one of start-up of an API gateway, start-up of a DB, start-up of a virtual machine, preparation of a storage, and setting of a network.

7. An information processing device, comprising:
a display control unit executing
processing of displaying a design screen of a system, and
processing of disposing a component image corresponding to a type of system component prepared in advance and a flow image indicating a data flow between the system components on the design screen, in accordance with a user manipulation;
a creation unit creating a design file of the system, on the basis of the component image and the flow image disposed on the design screen; and
a construction unit constructing an infrastructure of the system, on the basis of the design file.

8. A program for causing a computer to execute an information processing method, comprising:
processing of displaying a design screen of a system;
processing of disposing a component image corresponding to a type of system component prepared in advance and a flow image indicating a data flow between the system components on the design screen, in accordance with a user manipulation;
processing of creating a design file of the system, on the basis of the component image and the flow image disposed on the design screen; and
processing of constructing an infrastructure of the system, on the basis of the design file.
